# EUROPÄISCHE PATENTANMELDUNG

(11) **EP 4 279 620 A1**
(43) Veröffentlichungstag der Anmeldung: **22.11.2023**
(21) Anmeldenummer: 22174597.9
(22) Anmeldetag: 20.05.2022
(51) Int. Cl.: C22C 1/04, B23K 35/30, C22C 19/05, C22C 19/07

(54) **LOTMISCHUNG ZUR ANWENDUNG IN EINEM VERFAHREN ZUM LÖTEN EINES BAUTEILS, ADDITIVLEGIERUNG, LÖTVERFAHREN UND BAUTEIL**

(71) Anmelder: MTU Aero Engines AG, 80995 München (DE)
(72) Erfinder: Reker, Dirk Wilhelm, 30855 Langenhagen (DE); Sowa, Roman, 36-002 Jasionka (PL)

(57) **Zusammenfassung**

Die Erfindung betrifft eine Lotmischung (S) zur Anwendung in einem Verfahren zum Löten eines Bauteils (C), welches eine Nickelbasis-Superlegierung als Grundwerkstoff (G) aufweist, wobei die Lotmischung (S) die folgenden Pulver in einem vorbestimmten Mischverhältnis umfasst: ein Pulver einer ersten Lotlegierung (BFM1), ein Pulver einer zweiten Lotlegierung (BFM2), ein Pulver einer dritten Lotlegierung (BFM3) und ein Pulver einer Additivlegierung (ADD) umfasst.

## Beschreibung

Die Erfindung betrifft eine Lotmischung zur Anwendung in einem Verfahren zum Löten eines Bauteils gemäß den Merkmalen des Oberbegriffs des Anspruchs 1, eine Additivlegierung für eine Lotmischung gemäß den Merkmalen des Oberbegriffs des Anspruchs 13, ein Lötverfahren zum Löten eines Bauteils gemäß den Merkmalen des Oberbegriffs des Anspruchs 14 sowie ein Bauteil für eine Strömungsmaschine gemäß den Merkmalen des Oberbegriffs des Anspruchs 15.

Bei der Reparatur von polykristallinen und einkristallinen Hochdruckturbinenkomponenten ist es erforderlich, eine unerwünschte Beeinflussung eines Gefüges der Hochdruckturbinenkomponente zu vermeiden. Aus diesem Grund können beispielsweise Schweißverfahren aufgrund einer Heißrissanfälligkeit von ausscheidungsgehärteten Nickelbasis-Superlegierungen nicht angewandt werden. Stattdessen werden Reparaturlötverfahren zur Reparatur von Hochdruckturbinenkomponenten angewandt. In Reparaturlötverfahren wird ein Lot auf Nickel- und/oder Cobaltbasis im Prozess eines Hochtemperaturlötens unter Vakuum verwendet. Die verwendeten Lote weisen eine Legierungschemie auf, die ähnlich zum Grundwerkstoff des Bauteils ist, auf welchem das Lot aufgetragen wird. Um eine zum Schmelzen des Lots erforderliche Temperatur zu senken ist es üblich, dem Lot sogenannte Schmelzpunktsenker als Legierungselement zuzufügen. Ein Senken der Temperatur ist insbesondere erforderlich, um eine Schädigung eines Gefüges eines Grundwerkstoffs des zu lötenden Bauteils zu vermeiden.

Bei den Schmelzpunktsenkern handelt es sich gewöhnlicherweise um Bor oder Silizium. Im Prozess des Temperaturlötens werden Temperaturen von 1100°C bis 1300°C, üblicherweise 1150°C bis 1250°C und Haltezeiten von Minuten bis vielen Stunden gefahren. Das Lot soll dabei isotherm an der Lötstelle erstarren. Dies erfolgt dadurch, dass das Lot bei einer vorbestimmten Temperatur gehalten wird, sodass der Schmelzpunktsenker aus dem Lot in den Grundwerkstoff diffundieren kann. Aufgrund der Abnahme der Konzentration des Schmelzpunktsenkers in dem Lot steigt der Schmelzpunkt des Lotes an, sodass das Lot bei konstanter Temperatur erstarren kann.

Bei größeren Rissen ist es erforderlich, dem Lot eine Additivlegierung zuzufügen, welches mehrere Funktionen erfüllt. Die Additivlegierung ist unter anderem dazu vorgesehen, als Diffusionssenke zu wirken und dabei den Schmelzpunktsenker aufzunehmen. Die Additivlegierung ist zur Spaltfüllung zur Reduzierung der effektiven Borkonzentration vorgesehen. Die Additivlegierung fungiert dabei als Füllstoff bei großen Spaltbreiten, wodurch sich die Menge des einzusetzenden Lotes und somit auch des Schmelzpunktsenkers "Bor" reduziert.

Die Additivlegierung wird auch für einen Materialaufbau eingesetzt. Dies ist bei großen Spaltbreiten oberhalb von 300 µmm bis 500 µm erforderlich, weil bei diesen Spaltbreiten die Oberflächenspannung von Metallschmelzen (Lot) nicht ausreicht, um den Spalt zu füllen. Das Resultat einer zu geringen Oberflächenspannung wäre ein Herauslaufen des Lotes, wodurch Füllfehler entstehen würden, die sich wiederum negativ auf die Eigenschaften einer Lötverbindung auswirken. Durch die Additivlegierung entstehen zwischen Partikeln Kapillaren, die ein Verlaufen des Lotes reduzieren und das Lot an der Stelle des Lotauftrages halten. Diese Funktion ist insbesondere bei Wandstärkenaufbauten wichtig, da dabei kein Spalt gelötet wird und keine Kapillarwirkung durch eine Bauteilgeometrie hervorgerufen werden kann.

Bei größeren Rissen ist es wirtschaftlich nicht umsetzbar, den Diffusionsprozess so lange durchzuführen, bis der Schmelzpunktsenker in einem ausreichenden Umfang in den Grundwerkstoff diffundiert ist. Die Schmelzpunktsenker können dadurch in dem Lot Sprödphasen verursachen. Ein weiterer Nachteil an dem gegenwärtigen Verfahren ist die Tatsache, dass der Schmelzpunktsenker nach einer erstmaligen Reparatur in den Grundwerkstoff diffundiert ist. Im Fall einer zweiten Reparatur ist der Grundwerkstoff schon mit dem Temperatursenker angereichert, sodass kein Konzentrationsgefälle vorliegt. Bei der zweiten Temperatur kann der Schmelzpunktsenker somit nicht von dem Lot in den Grundwerkstoff diffundieren.

Aus der DE 10 2010 036 630 B4 sind ein Lötverfahren und ein Lötmaterial zur Reparatur einer Komponente bekannt. In dem Verfahren ist es vorgesehen, wenigstens eine erste Hartlötpaste auf eine Lücke in der Komponente aufzubringen. Der Hartlötpaste ist dabei ein Pulver aus einer ersten und einer zweiten Legierung und einem organischen Bindemittel beigefügt. Die erste Legierung weist dabei eine höhere Schmelztemperatur auf als die zweite Legierung.

Die US 10,549,372 B2 beschreibt eine Hartlötlegierungszusammensetzung, welche 5 bis 25 Gew.-% Germanium und 1 bis 4 Gew.-% Bor aufweist.

Die CN 105149597 B beschreibt ein Verfahren zum Reparieren oder Verbinden von Metall- oder Legierungsteilen. Es ist vorgesehen, ein Füllstoffpulver zu verwenden, wobei das Füllstoffpulver 8-35 Gew.-% Cr, 0-15 Gew.-% W, 0-15 Gew.-% Mo, 0-10 Gew.-% Ta, 0-6 Gew.-% Nb, 2-8 Gew.-% Al, 0-6 Gew.-% Ti, 0-5 Gew.-% Hf, 0-1 Gew.-% Y, als Rest Ni und Verunreinigungen. Enthält.

Die EP 1 957 685 B1 offenbart ein Verfahren zum Reparieren von Rissen in Bauteilen aus einer Superlegierung mittels Löten. Die Superlegierung weist folgende Zusammensetzung auf: 2 bis 16 Gew.-% Cr; 0 bis 15 Gew.-% Co; 0 bis 3 Gew.-% Mo; 0 bis 10 Gew.-% W; 0 bis 12 Gew.-% Ta; 0 bis 6 Gew.-% Re; 0 bis 1 Gew.-% V; 0 bis 0,5 Gew.-% Nb; 0,05 bis 6,5 Gew.-% Al; 0 bis 5 Gew.-% Ti; 0 bis 0,2 Gew.-% Hf; 0 bis 0,07 Gew.-% C; Rest Ni. Ein Lotmaterial ist eine Legierung mit denselben Legierungskomponenten wie die Legierung des Bauteils.

Die EP 1 258 545 B1 beschreibt ein Verfahren zum isothermischen Hartlöten von einkristallinen Gegenständen.

Die US 6,508,000 B2 offenbart ein Verfahren zur Reparatur von Turbinenschaufeln und Turbinenleitschaufeln durch Flüssigphasenverklebung.

Die US 5,156,321 A offenbart ein pulvermetallurgisches Reparaturverfahren. Ein metallisches Pulver für das Reparaturverfahren umfasst eine Superlegierung, umfassend 8-35 Gew.-% Cr, 0-15 Gew.-% W, 0-15% Mo, 0-10% Ta, 0-6% Nb, 0-6% Al, 0-6% Ti, 0-5% Hf, 0-1% Y, 50-80% Ni, und/oder Co, und/oder Fe.

Für das Reparaturlöten an einkristallinen und polykristallinen Hochdruckturbinenkomponenten, beispielsweise Vanes, Shrouds, etc. werden Lote auf Nickel- und/oder Cobaltbasis im Prozess des Hochtemperaturlötens unter Vakuum verwendet. Anwendungsfelder sind die Reparatur von Rissen, Wandstärkenaufbauten und Geometrieregenerationen, wie bspw. das Wiederherstellen von Kühlluftbohrungsgeometrien. Schweißverfahren können aktuell aufgrund der Heißrissanfälligkeit von ausscheidungsgehärteten Nickelbasis-Superlegierungen nicht angewandt werden. Die zum Einsatz kommenden Lote weisen in der Regel eine Legierungschemie auf, die ähnlich zum Grundwerkstoff G ist. Um den Schmelzpunkt der Legierungen zu senken, wird dem Lot Bor üblicherweise 2,3 - 3,5 Ma.-% oder Silizium hinzulegiert. Alternative Schmelzpunktsenker selten angewandt bzw. Technologie befindet sich noch in der Forschung und Entwicklung sind bspw. Germanium, in seltenen Fällen auch Titan, Hafnium, Zirkonium, Palladium oder Mangan.

Im Prozess des Reparaturlötens werden Temperaturen T von 1100°C - 1300°C, üblicherweise 1150°C - 1250°C, und Haltezeiten t von Minuten bis vielen Stunden 3 - 48 h gefahren. Bei hohen Temperaturen T soll das schmelzpunktsenkende Element aus dem Lot in den Grundwerkstoff G diffundieren, wodurch das Lot am Schmelzpunktsenker verarmt und somit bei konstanter Temperatur T in einem isothermen Erstarrungsvorgang erstarren kann.

Die Lote werden in der Regel als Paste auf die zu reparierenden Bereiche aufgetragen. Beim Löten von großen Spaltbreiten wird dem Lot eine hochschmelzende Komponente hinzugemischt, die in ihrer Zusammensetzung gleich oder ähnlich zum Grundwerkstoff G ist. Ein bekanntes Verfahren ist das Activated Diffusion Healing, ADH, GE, bei dem ein Lotbestandteil D-15 und eine hochschmelzende Komponente oder auch Additiv genannt Rene 80 gemischt werden. Übliche Mischungsverhältnisse zwischen Lot und Additiv sind 30/70, 40/60, 50/50, 60/40. Das Additiv fungiert als Diffusionssenke und sorgt dafür, dass das Lot bei großen Spaltbreiten nicht verläuft. Der Prozess unter Verwendung eines Additivs ähnelt dem Flüssigphasensintern.

Da beim Reparaturlöten Risse mit großen Rissflankenabständen und somit großen Lötspaltbreiten gelötet werden, muss zum Verfüllen eines Risses viel Lot aufgetragen werden. Die für den Prozess notwendigen Schmelzpunktsenker liegen dadurch auch in einer großen Menge vor, weshalb sie innerhalb wirtschaftlicher Prozesszeiten t nicht ausreichend in den Grundwerkstoff G diffundieren können und Sprödphasen verursachen. Sprödphasen sind unerwünschte Phasen, die typischerweise unter Verwendung des jeweiligen Schmelzpunktsenkers bei hohen Konzentrationen auftreten. Bor bildet beispielsweise verschiedene Boride, in der Regel Chromboride CrB, Cr2B, CrB2, M5B3, M3B2; wobei M für verschiedene Metalle, in der Regel Chrom, Molybdän, Wolfram steht. Titan bildet eine η-Phase. Germanium bildet eine zu stabile γ'-Phase, die primär erstarrt und somit als "Saum" vorliegt. Niob bildet eine Laves Phase. Ein Typ der Laves Phase ist dabei abhängig von anderen Legierungselementen.

Ein weiteres Verfahren ist neben dem Activated Diffusion Healing das Partitioned Alloy Component Healing, PACH, GE. Beim Partitioned Alloy Component Healing sind verschiedenen Lote für das Löten von Nickel- und Cobaltbasislegierungen genannt.

Eine vollständige isotherme Erstarrung des Lotes führt zu einem sprödphasenfreien Lötgefüge. Dieses stellt sich aufgrund der limitierten Haltezeiten t bei hohen Temperaturen T und aufgrund der großen Lötspaltbreiten im Reparaturlöten nicht ein.Die festigkeitsmindernden und somit unerwünschten Sprödphasen lassen sich nur bei hohen Temperaturen T und sehr langen Haltezeiten t vermeiden bzw. reduzieren bspw. auf 48-72 Stunden. Wenn Sprödphasen vermieden werden sollen, sind die Prozesszeiten t bei hohen Temperaturen T nicht nur unwirtschaftlich, sondern verursachen aufgrund der langen Haltezeiten t bei hohen Temperaturen T eine Schädigung des Grundwerkstoffes G.

Zudem ist eine konventionelle Lötreparatur aufgrund zufällig vorliegender Rissbreiten nicht reproduzierbar, sodass sie nach einer ersten Reparatur nicht mit gleichen Eigenschaften wiederholt werden kann. Da nach der ersten Reparatur der Grundwerkstoff G bereits mit dem schmelzpunktsenkenden Element angereichert ist, existiert kein Konzentrationsgradient bei einer neuen Reparatur. Eine Reparatur von nicht-lebensdauer-beeinträchtigten Teilen ist somit nur eingeschränkt möglich.

Es ist eine Aufgabe der Erfindung, ein Löten eines Bauteils aus einer Nickelbasis-Superlegierung ohne eine Bildung von Sprödphasen, etwaTCP (topologisch dicht gepackte Phasen, GCP (geometrisch dicht gepackte Phasen), eutektische Boride (script like phase, zu ermöglichen. Eine weitere Aufgabe der Erfindung besteht darin, eine Reproduzierbarkeit des Lotes bei einer erneuten Reparatur des Bauteils zu ermöglichen.

Die Aufgabe wird erfindungsgemäß durch eine Lotmischung zur Anwendung in einem Verfahren zum Löten eines Bauteils gemäß den Merkmalen des Anspruchs 1, eine Additivlegierung für eine Lotmischung gemäß den Merkmalen des Anspruchs 13 ein Lötverfahren zum Löten eines Bauteils gemäß den Merkmalen des Anspruchs 14 sowie ein Bauteil für eine Strömungsmaschine gemäß den Merkmalen des Anspruchs 15 gelöst. Vorteilhafte Ausgestaltungen mit zweckmäßigen Weiterbildungen der Erfindung sind in den jeweiligen Unteransprüchen angegeben, wobei vorteilhafte Ausgestaltungen jedes Erfindungsaspekts als vorteilhafte Ausgestaltungen der jeweils anderen Erfindungsaspekte anzusehen sind.

Ein erster Aspekt der Erfindung betrifft eine Lotmischung zur Anwendung in einem Verfahren zum Löten eines Bauteils, welches eine Nickelbasis-Superlegierung und/oder Kobaltbasis-Legierung als Grundwerkstoff aufweist. Mit anderen Worten betrifft der erste Aspekt der Erfindung eine zum Reparaturlöten eines Bauteils aus einer Nickelbasis-Superlegierung vorgesehene Lotmischung. Die Lotmischung umfasst dabei Pulver, die in einem vorbestimmten Mischverhältnis vermischt sind. Das Pulver der Lotmischung umfasst ein Pulver einer ersten Lotlegierung, ein Pulver einer zweiten Lotlegierung, ein Pulver einer dritten Lotlegierung und ein Pulver einer Additivlegierung. Bei der ersten Lotlegierung, der zweiten Lotlegierung und der dritten Lotlegierung kann es sich insbesondere um so genannte Hochtemperaturlote handeln. Die Additivlegierung kann unter anderem dazu vorgesehen sein, Schmelzpunktsenker der Lotlegierungen während eines Diffusionsprozesses aufzunehmen und die weiteren additivspezifischen Aufgaben, welche in der Einleitung beschrieben sind, zu erfüllen. Dadurch fungiert die Additivlegierung auch als Diffusionssenke, sodass ein Anteil der in den Grundwerkstoff diffundierenden Schmelzpunktsenker gesenkt werden kann.

Eine Legierungszusammensetzung der ersten Lotlegierung umfasst die folgenden Massenanteile: Zwischen 5,00 % und 15,00 % Cobalt, zwischen 8,00 % und 16,00 % Chrom, zwischen 1,00 % und 4,50 % Aluminium, zwischen 0,00 % und 4,00 % Tantal, zwischen 0,00 % und 10,00 % Germanium, zwischen 1,00 % und 3,00 % Bor, zwischen 0,00 % und 4,00 % Hafnium, und als Rest Nickel sowie unvermeidbare Verunreinigungen. Die erste Lotlegierung kann beispielsweise 5,00 %, 5,10 %, 5,20 %, 5,30 %, 5,40 %, 5,50 %, 5,60 %, 5,70 %, 5,80 %, 5,90 %, 6,00 %, 6,10 %, 6,20 %, 6,30 %, 6,40 %, 6,50 %, 6,60 %, 6,70 %, 6,80 %, 6,90 %, 7,00 %, 7,10 %, 7,20 %, 7,30 %, 7,40 %, 7,50 %, 7,60 %, 7,70 %, 7,80 %, 7,90 %, 8,00 %, 8,10 %, 8,20 %, 8,30 %, 8,40 %, 8,50 %, 8,60 %, 8,70 %, 8,80 %, 8,90 %, 9,00 %, 9,10 %, 9,20 %, 9,30 %, 9,40 %, 9,50 %, 9,60 %, 9,70 %, 9,80 %, 9,90 %, 10,00 %, 10,10 %, 10,20 %, 10,30 %, 10,40 %, 10,50 %, 10,60 %, 10,70 %, 10,80 %, 10,90 %, 11,00 %, 11,10 %, 11,20 %, 11,30 %, 11,40 %, 11,50 %, 11,60 %, 11,70 %, 11,80 %, 11,90 %, 12,00 %, 12,10 %, 12,20 %, 12,30 %, 12,40 %, 12,50 %, 12,60 %, 12,70 %, 12,80 %, 12,90 %, 13,00 %, 13,10 %, 13,20 %, 13,30 %, 13,40 %, 13,50 %, 13,60 %, 13,70 %, 13,80 %, 13,90 %, 14,00 %, 14,10 %, 14,20 %, 14,30 %, 14,40 %, 14,50 %, 14,60 %, 14,70 %, 14,80 %, 14,90 %, 15,00 % Cobalt; 8,00 %, 8,10 %, 8,20 %, 8,30 %, 8,40 %, 8,50 %, 8,60 %, 8,70 %, 8,80 %, 8,90 %, 9,00 %, 9,10 %, 9,20 %, 9,30 %, 9,40 %, 9,50 %, 9,60 %, 9,70 %, 9,80 %, 9,90 %, 10,00 %, 10,10 %, 10,20 %, 10,30 %, 10,40 %, 10,50 %, 10,60 %, 10,70 %, 10,80 %, 10,90 %, 11,00 %, 11,10 %, 11,20 %, 11,30 %, 11,40 %, 11,50 %, 11,60 %, 11,70 %, 11,80 %, 11,90 %, 12,00 %, 12,10 %, 12,20 %, 12,30 %, 12,40 %, 12,50 %, 12,60 %, 12,70 %, 12,80 %, 12,90 %, 13,00 %, 13,10 %, 13,20 %, 13,30 %, 13,40 %, 13,50 %, 13,60 %, 13,70 %, 13,80 %, 13,90 %, 14,00 %, 14,10 %, 14,20 %, 14,30 %, 14,40 %, 14,50 %, 14,60 %, 14,70 %, 14,80 %, 14,90 %, 15,00 %, 15,10 %, 15,20 %, 15,30 %, 15,40 %, 15,50 %, 15,60 %, 15,70 %, 15,80 %, 15,90 %, 16,00 %Chrom; 1,00 %, 1,10 %, 1,20 %, 1,30 %, 1,40 %, 1,50 %, 1,60 %, 1,70 %, 1,80 %, 1,90 %, 2,00 %, 2,10 %, 2,20 %, 2,30 %, 2,40 %, 2,50 %, 2,60 %, 2,70 %, 2,80 %, 2,90 %, 3,00 %, 3,10 %, 3,20 %, 3,30 %, 3,40 %, 3,50 %, 3,60 %, 3,70 %, 3,80 %, 3,90 %, 4,00 %, 4,10 %, 4,20 %, 4,30 %, 4,40 %, 4,50 % Aluminium; 0,00 %, 0,10 %, 0,20 %, 0,30 %, 0,40 % 0,50 %, 0,60 %, 0,70 %, 0,80 %, 0,90 %, 1,00 %, 1,10 %, 1,20 %, 1,30 %, 1,40 %, 1,50 %, 1,60 %, 1,70 %, 1,80 %, 1,90 %, 2,00 %, 2,10 %, 2,20 %, 2,30 %, 2,40 %, 2,50 %, 2,60 %, 2,70 %, 2,80 %, 2,90 %, 3,00 %, 3,10 %, 3,20 %, 3,30 %, 3,40 %, 3,50 %, 3,60 %, 3,70 %, 3,80 %, 3,90 %, 4,00 % Tantal; 0,00 %, 0,10 %, 0,20 %, 0,30 %, 0,40 % 0,50 %, 0,60 %, 0,70 %, 0,80 %, 0,90 %, 1,00 %, 1,10 %, 1,20 %, 1,30 %, 1,40 %, 1,50 %, 1,60 %, 1,70 %, 1,80 %, 1,90 %, 2,00 %, 2,10 %, 2,20 %, 2,30 %, 2,40 %, 2,50 %, 2,60 %, 2,70 %, 2,80 %, 2,90 %, 3,00 %, 3,10 %, 3,20 %, 3,30 %, 3,40 %, 3,50 %, 3,60 %, 3,70 %, 3,80 %, 3,90 %, 4,00 %, 4,10 %, 4,20 %, 4,30 %, 4,40 %, 4,50 %, 4,60 %, 4,70 %, 4,80 %, 4,90 %, 5,00 %, 5,10 %, 5,20 %, 5,30 %, 5,40 %, 5,50 %, 5,60 %, 5,70 %, 5,80 %, 5,90 %, 6,00 %, 6,10 %, 6,20 %, 6,30 %, 6,40 %, 6,50 %, 6,60 %, 6,70 %, 6,80 %, 6,90 %, 7,00 %, 7,10 %, 7,20 %, 7,30 %, 7,40 %, 7,50 %, 7,60 %, 7,70 %, 7,80 %, 7,90 %, 8,00 %, 8,10 %, 8,20 %, 8,30 %, 8,40 %, 8,50 %, 8,60 %, 8,70 %, 8,80 %, 8,90 %, 9,00 %, 9,10 %, 9,20 %, 9,30 %, 9,40 %, 9,50 %, 9,60 %, 9,70 %, 9,80 %, 9,90 %, 10,00 % Germanium; 1,00 %, 1,10 %, 1,20 %, 1,30 %, 1,40 %, 1,50 %, 1,60 %, 1,70 %, 1,80 %, 1,90 %, 2,00 %, 2,10 %, 2,20 %, 2,30 %, 2,40 %, 2,50 %, 2,60 %, 2,70 %, 2,80 %, 2,90 %, 3,00 % Bor; 0,00 % 0,10 %, 0,20 %, 0,30 %, 0,40 % 0,50 %, 0,60 %, 0,70 %, 0,80 %, 0,90 %, 1,00 %, 1,10 %, 1,20 %, 1,30 %, 1,40 %, 1,50 %, 1,60 %, 1,70 %, 1,80 %, 1,90 %, 2,00 %, 2,10 %, 2,20 %, 2,30 %, 2,40 %, 2,50 %, 2,60 %, 2,70 %, 2,80 %, 2,90 %, 3,00 %, 3,10 %, 3,20 %, 3,30 %, 3,40 %, 3,50 %, 3,60 %, 3,70 %, 3,80 %, 3,90 %, 4,00 % Hafnium; und als Rest Nickel und Verunreinigungen umfassen.

Eine Legierungszusammensetzung der zweiten Lotlegierung umfasst die folgenden Massenanteile: zwischen 15,00 % und 25,00 % Chrom; zwischen 8,50 % und 13,00 % Titan; zwischen 0,00 % und 5,00 % Niob;; und als Rest Cobalt sowie unvermeidbare Verunreinigungen. Die zweite Lotlegierung kann beispielsweise 15,00 %, 15,10 %, 15,20 %, 15,30 %, 15,40 %, 15,50 %, 15,60 %, 15,70 %, 15,80 %, 15,90 %, 16,00 %, 16,10 %, 16,20 %, 16,30 %, 16,40 %, 16,50 %, 16,60 %, 16,70 %, 16,80 %, 16,90 %, 17,00 %, 17,10 %, 17,20 %, 17,30 %, 17,40 %, 17,50 %, 17,60 %, 17,70 %, 17,80 %, 17,90 %, 18,00 %, 18,10 %, 18,20 %, 18,30 %, 18,40 %, 18,50 %, 18,60 %, 18,70 %, 18,80 %, 18,90 %, 19,00 %, 19,10 %, 19,20 %, 19,30 %, 19,40 %, 19,50 %, 19,60 %, 19,70 %, 19,80 %, 19,90 %, 20,00 %, 20,10 %, 20,20 %, 20,30 %, 20,40 %, 20,50 %, 20,60 %, 20,70 %, 20,80 %, 20,90 %, 21,00 %, 21,10 %, 21,20 %, 21,30 %, 21,40 %, 21,50 %, 21,60 %, 21,70 %, 21,80 %, 21,90 %, 22,00 %, 22,10 %, 22,20 %, 22,30 %, 22,40 %, 22,50 %, 22,60 %, 22,70 %, 22,80 %, 22,90 %, 23,00 %, 23,10 %, 23,20 %, 23,30 %, 23,40 %, 23,50 %, 23,60 %, 23,70 %, 23,80 %, 23,90 %, 24,00 %, 24,10 %, 24,20 %, 24,30 %, 24,40 %, 24,50 %, 24,60 %, 24,70 %, 24,80 %, 24,90 %, 25,00 % Chrom; 8,50 %, 8,60 %, 8,70 %, 8,80 %, 8,90 %, 9,00 %, 9,10 %, 9,20 %, 9,30 %, 9,40 %, 9,50 %, 9,60 %, 9,70 %, 9,80 %, 9,90 %, 10,00 %, 10,10 %, 10,20 %, 10,30 %, 10,40 %, 10,50 %, 10,60 %, 10,70 %, 10,80 %, 10,90 %, 11,00 %, 11,10 %, 11,20 %, 11,30 %, 11,40 %, 11,50 %, 11,60 %, 11,70 %, 11,80 %, 11,90 %, 12,00 %, 12,10 %, 12,20 %, 12,30 %, 12,40 %, 12,50 %, 12,60 %, 12,70 %, 12,80 %, 12,90 %, 13,00 % Titan; 0,00 % 0,10 %, 0,20 %, 0,30 %, 0,40 % 0,50 %, 0,60 %, 0,70 %, 0,80 %, 0,90 %, 1,00 %, 1,10 %, 1,20 %, 1,30 %, 1,40 %, 1,50 %, 1,60 %, 1,70 %, 1,80 %, 1,90 %, 2,00 %, 2,10 %, 2,20 %, 2,30 %, 2,40 %, 2,50 %, 2,60 %, 2,70 %, 2,80 %, 2,90 %, 3,00 %, 3,10 %, 3,20 %, 3,30 %, 3,40 %, 3,50 %, 3,60 %, 3,70 %, 3,80 %, 3,90 %, 4,00 %, 4,10 %, 4,20 %, 4,30 %, 4,40 %, 4,50 %, 4,60 %, 4,70 %, 4,80 %, 4,90 %, 5,00 % Niob; und als Rest Cobalt und Verunreinigungen umfassen.

Eine Legierungszusammensetzung der dritten Lotlegierung umfasst die folgenden Massenanteile: zwischen 0,00 % und 10,00 % Cobalt; zwischen 18,00 % und 30,00 % Chrom; zwischen 10,00 % und 14,50 % Titan; zwischen 0,00 % und 1,80 % Niob; und als Rest Nickel sowie unvermeidbare Verunreinigungen. Die dritte Lotlegierung kann beispielsweise 0,00 %, 0,10 %, 0,20 %, 0,30 %, 0,40 % 0,50 %, 0,60 %, 0,70 %, 0,80 %, 0,90 %, 1,00 %, 1,10 %, 1,20 %, 1,30 %, 1,40 %, 1,50 %, 1,60 %, 1,70 %, 1,80 %, 1,90 %, 2,00 %, 2,10 %, 2,20 %, 2,30 %, 2,40 %, 2,50 %, 2,60 %, 2,70 %, 2,80 %, 2,90 %, 3,00 %, 3,10 %, 3,20 %, 3,30 %, 3,40 %, 3,50 %, 3,60 %, 3,70 %, 3,80 %, 3,90 %, 4,00 %, 4,10 %, 4,20 %, 4,30 %, 4,40 %, 4,50 %, 4,60 %, 4,70 %, 4,80 %, 4,90 %, 5,00 %, 5,10 %, 5,20 %, 5,30 %, 5,40 %, 5,50 %, 5,60 %, 5,70 %, 5,80 %, 5,90 %, 6,00 %, 6,10 %, 6,20 %, 6,30 %, 6,40 %, 6,50 %, 6,60 %, 6,70 %, 6,80 %, 6,90 %, 7,00 %, 7,10 %, 7,20 %, 7,30 %, 7,40 %, 7,50 %, 7,60 %, 7,70 %, 7,80 %, 7,90 %, 8,00 %, 8,10 %, 8,20 %, 8,30 %, 8,40 %, 8,50 %, 8,60 %, 8,70 %, 8,80 %, 8,90 %, 9,00 %, 9,10 %, 9,20 %, 9,30 %, 9,40 %, 9,50 %, 9,60 %, 9,70 %, 9,80 %, 9,90 %, 10,00 % Cobalt; 18,00 %, 18,10 %, 18,20 %, 18,30 %, 18,40 %, 18,50 %, 18,60 %, 18,70 %, 18,80 %, 18,90 %, 19,00 %, 19,10 %, 19,20 %, 19,30 %, 19,40 %, 19,50 %, 19,60 %, 19,70 %, 19,80 %, 19,90 %, 20,00 %, 20,10 %, 20,20 %, 20,30 %, 20,40 %, 20,50 %, 20,60 %, 20,70 %, 20,80 %, 20,90 %, 21,00 %, 21,10 %, 21,20 %, 21,30 %, 21,40 %, 21,50 %, 21,60 %, 21,70 %, 21,80 %, 21,90 %, 22,00 %, 22,10 %, 22,20 %, 22,30 %, 22,40 %, 22,50 %, 22,60 %, 22,70 %, 22,80 %, 22,90 %, 23,00 %, 23,10 %, 23,20 %, 23,30 %, 23,40 %, 23,50 %, 23,60 %, 23,70 %, 23,80 %, 23,90 %, 24,00 %, 24,10 %, 24,20 %, 24,30 %, 24,40 %, 24,50 %, 24,60 %, 24,70 %, 24,80 %, 24,90 %, 25,00 %, 25,10 %, 25,20 %, 25,30 %, 25,40 %, 25,50 %, 25,60 %, 25,70 %, 25,80 %, 25,90 %, 26,00 %, 26,10 %, 26,20 %, 26,30 %, 26,40 %, 26,50 %, 26,60 %, 26,70 %, 26,80 %, 26,90 %, 27,00 %, 27,10 %, 27,20 %, 27,30 %, 27,40 %, 27,50 %, 27,60 %, 27,70 %, 27,80 %, 27,90 %, 28,00 %, 28,10 %, 28,20 %, 28,30 %, 28,40 %, 28,50 %, 28,60 %, 28,70 %, 28,80 %, 28,90 %, 29,00 %, 29,10 %, 29,20 %, 29,30 %, 29,40 %, 29,50 %, 29,60 %, 29,70 %, 29,80 %, 29,90 %, 30,00 % Chrom; 10,00 %, 10,10 %, 10,20 %, 10,30 %, 10,40 %, 10,50 %, 10,60 %, 10,70 %, 10,80 %, 10,90 %, 11,00 %, 11,10 %, 11,20 %, 11,30 %, 11,40 %, 11,50 %, 11,60 %, 11,70 %, 11,80 %, 11,90 %, 12,00 %, 12,10 %, 12,20 %, 12,30 %, 12,40 %, 12,50 %, 12,60 %, 12,70 %, 12,80 %, 12,90 %, 13,00 %, 13,10 %, 13,20 %, 13,30 %, 13,40 %, 13,50 %, 13,60 %, 13,70 %, 13,80 %, 13,90 %, 14,00 %, 14,10 %, 14,20 %, 14,30 %, 14,40 %, 14,50 %Titan; 0,00 %, 0,10 %, 0,20 %, 0,30 %, 0,40 %, 0,50 %, 0,60 %, 0,70 %, 0,80 %, 0,90 %, 1,00 %, 1,10 %, 1,20 %, 1,30 %, 1,40 %, 1,50 %, 1,60 %, 1,70 % Niob; und als Rest Nickel und Verunreinigungen umfassen.

Eine Legierungszusammensetzung der Additivlegierung umfasst die folgenden Massenanteile: zwischen 0,00 % und 10,00 % Cobalt; zwischen 10,00 % und 18,00 % Chrom; zwischen 4,00 % und 7,00 % Aluminium; zwischen 4,00 % und 7,00 % Tantal; zwischen 0,00 % und 3,00 % Molybdän; zwischen 5,00 % und 14,00 % Wolfram; zwischen 0,00 % und 0,6 % Yttrium; zwischen 0,00 % und 2,00 % Hafnium; und als Rest Nickel sowie unvermeidbare Verunreinigungen. Die Additivlegierung kann beispielsweise 0,00 %, 0,10 %, 0,20 %, 0,30 %, 0,40 %, 0,50 %, 0,60 %, 0,70 %, 0,80 %, 0,90 %, 1,00 %, 1,10 %, 1,20 %, 1,30 %, 1,40 %, 1,50 %, 1,60 %, 1,70 %, 1,80 %, 1,90 %, 2,00 %, 2,10 %, 2,20 %, 2,30 %, 2,40 %, 2,50 %, 2,60 %, 2,70 %, 2,80 %, 2,90 %, 3,00 %, 3,10 %, 3,20 %, 3,30 %, 3,40 %, 3,50 %, 3,60 %, 3,70 %, 3,80 %, 3,90 %, 4,00 %, 4,10 %, 4,20 %, 4,30 %, 4,40 %, 4,50 %, 4,60 %, 4,70 %, 4,80 %, 4,90 %, 5,00 %, 5,10 %, 5,20 %, 5,30 %, 5,40 %, 5,50 %, 5,60 %, 5,70 %, 5,80 %, 5,90 %, 6,00 %, 6,10 %, 6,20 %, 6,30 %, 6,40 %, 6,50 %, 6,60 %, 6,70 %, 6,80 %, 6,90 %, 7,00 %, 7,10 %, 7,20 %, 7,30 %, 7,40 %, 7,50 %, 7,60 %, 7,70 %, 7,80 %, 7,90 %, 8,00 %, 8,10 %, 8,20 %, 8,30 %, 8,40 %, 8,50 %, 8,60 %, 8,70 %, 8,80 %, 8,90 %, 9,00 %, 9,10 %, 9,20 %, 9,30 %, 9,40 %, 9,50 %, 9,60 %, 9,70 %, 9,80 %, 9,90 %, 10,00 % Cobalt; 10,00 %, 10,10 %, 10,20 %, 10,30 %, 10,40 %, 10,50 %, 10,60 %, 10,70 %, 10,80 %, 10,90 %, 11,00 %, 11,10 %, 11,20 %, 11,30 %, 11,40 %, 11,50 %, 11,60 %, 11,70 %, 11,80 %, 11,90 %, 12,00 %, 12,10 %, 12,20 %, 12,30 %, 12,40 %, 12,50 %, 12,60 %, 12,70 %, 12,80 %, 12,90 %, 13,00 %, 13,10 %, 13,20 %, 13,30 %, 13,40 %, 13,50 %, 13,60 %, 13,70 %, 13,80 %, 13,90 %, 14,00 %, 14,10 %, 14,20 %, 14,30 %, 14,40 %, 14,50 %, 14,60 %, 14,70 %, 14,80 %, 14,90 %, 15,00 %, 15,10 %, 15,20 %, 15,30 %, 15,40 %, 15,50 %, 15,60 %, 15,70 %, 15,80 %, 15,90 %, 16,00 %, 16,10 %, 16,20 %, 16,30 %, 16,40 %, 16,50 %, 16,60 %, 16,70 %, 16,80 %, 16,90 %, 17,00 %, 17,10 %, 17,20 %, 17,30 %, 17,40 %, 17,50 %, 17,60 %, 17,70 %, 17,80 %, 17,90 %, 18,00 % Chrom; 4,00 %, 4,10 %, 4,20 %, 4,30 %, 4,40 %, 4,50 %, 4,60 %, 4,70 %, 4,80 %, 4,90 %, 5,00 %, 5,10 %, 5,20 %, 5,30 %, 5,40 %, 5,50 %, 5,60 %, 5,70 %, 5,80 %, 5,90 %, 6,00 %, 6,10 %, 6,20 %, 6,30 %, 6,40 %, 6,50 %, 6,60 %, 6,70 %, 6,80 %, 6,90 %, 7,00 % Aluminium; 4,00 %, 4,10 %, 4,20 %, 4,30 %, 4,40 %, 4,50 %, 4,60 %, 4,70 %, 4,80 %, 4,90 %, 5,00 %, 5,10 %, 5,20 %, 5,30 %, 5,40 %, 5,50 %, 5,60 %, 5,70 %, 5,80 %, 5,90 %, 6,00 %, 6,10 %, 6,20 %, 6,30 %, 6,40 %, 6,50 %, 6,60 %, 6,70 %, 6,80 %, 6,90 %, 7,00 %Tantal; 0,00 % 0,10 %, 0,20 %, 0,30 %, 0,40 % 0,50 %, 0,60 %, 0,70 %, 0,80 %, 0,90 %, 1,00 %, 1,10 %, 1,20 %, 1,30 %, 1,40 %, 1,50 %, 1,60 %, 1,70 %, 1,80 %, 1,90 %, 2,00 %, 2,10 %, 2,20 %, 2,30 %, 2,40 %, 2,50 %, 2,60 %, 2,70 %, 2,80 %, 2,90 %, 3,00 % Molybdän; 5,00 %, 5,10 %, 5,20 %, 5,30 %, 5,40 %, 5,50 %, 5,60 %, 5,70 %, 5,80 %, 5,90 %, 6,00 %, 6,10 %, 6,20 %, 6,30 %, 6,40 %, 6,50 %, 6,60 %, 6,70 %, 6,80 %, 6,90 %, 7,00 %, 7,10 %, 7,20 %, 7,30 %, 7,40 %, 7,50 %, 7,60 %, 7,70 %, 7,80 %, 7,90 %, 8,00 %, 8,10 %, 8,20 %, 8,30 %, 8,40 %, 8,50 %, 8,60 %, 8,70 %, 8,80 %, 8,90 %, 9,00 %, 9,10 %, 9,20 %, 9,30 %, 9,40 %, 9,50 %, 9,60 %, 9,70 %, 9,80 %, 9,90 %, 10,00 %, 10,10 %, 10,20 %, 10,30 %, 10,40 %, 10,50 %, 10,60 %, 10,70 %, 10,80 %, 10,90 %, 11,00 %, 11,10 %, 11,20 %, 11,30 %, 11,40 %, 11,50 %, 11,60 %, 11,70 %, 11,80 %, 11,90 %, 12,00 %, 12,10 %, 12,20 %, 12,30 %, 12,40 %, 12,50 %, 12,60 %, 12,70 %, 12,80 %, 12,90 %, 13,00 %, 13,10 %, 13,20 %, 13,30 %, 13,40 %, 13,50 %, 13,60 %, 13,70 %, 13,80 %, 13,90 %, 14,00 %Wolfram; 0,00 %, 0,10 %, 0,20 %, 0,30 %, 0,40 %, 0,50 %, 0,60 % Yttrium; 0,00 %, 0,10 %, 0,20 %, 0,30 %, 0,40 %, 0,50 %, 0,60 %, 0,70 %, 0,80 %, 0,90 %, 1,00 %, 1,10 %, 1,20 %, 1,30 %, 1,40 %, 1,50 %, 1,60 %, 1,70 %, 1,80 %, 1,90 % Hafnium; und als Rest Nickel und Verunreinigungen umfassen.

Durch die Erfindung ergibt sich der Vorteil, dass der konventionelle Reparaturumfang erweitert werden kann, wodurch auch große Risse gelötet werden können. Zudem kann das Lot an Stellen aufgetragen werden, an denen eine intensive Grundwerkstoffinteraktion kritisch ist

Die Erfindung umfasst auch Weiterbildungen, durch die sich weitere Vorteile ergeben.

Eine Weiterbildung der Erfindung sieht vor, dass die Legierungszusammensetzung der ersten Lotlegierung den folgenden Massenanteil umfasst: zwischen 0,00 % und 0,1 % Yttrium. Die erste Lotlegierung kann beispielsweise 0,000 %, 0,005 %, 0,010 %, 0,015 %, 0,020 %, 0,025 %, 0,030 %, 0,035 %, 0,040 %, 0,045 %, 0,050 % Yttrium umfassen.

Durch die Beimischung von Yttrium ergibt sich der Vorteil, dass die Benetzungseigenschaften auf potentiell vorliegenden Oxiden auf Rissflanken verbessert werden.

Eine Weiterbildung der Erfindung sieht vor, dass die Legierungszusammensetzung der zweiten Lotlegierung den folgenden Massenanteil umfasst: zwischen 0,00 % und 3,00 % Aluminium. Die zweite Lotlegierung kann beispielsweise 0,00 %, 0,10 %, 0,20 %, 0,30 %, 0,40 %, 0,50 %, 0,60 %, 0,70 %, 0,80 %, 0,90 %, 1,00 %, 1,10 %, 1,20 %, 1,30 %, 1,40 %, 1,50 %, 1,60 %, 1,70 %, 1,80 %, 1,90 %, 2,00 %, 2,10 %, 2,20 %, 2,30 %, 2,40 %, 2,50 %, 2,60 %, 2,70 %, 2,80 %, 2,90 %, 3,00 % Aluminium umfassen.

Durch die Beimischung von Aluminium ergibt sich der Vorteil, dass die Oxidationseigenschaften verbessert werden. Um einer Reduzierung der Aluminiumkonzentration aus der ersten Lotlegierung durch die zweite und dritte Lotlegierung während der Verdünnung nach Flüssigphasenhomogenisierung entgegenzuwirken, können geringe Anteile von Aluminium in der zweiten und/oder dritten Lotlegierung hinzulegiert sein.

Eine Weiterbildung der Erfindung sieht vor, dass die Legierungszusammensetzung der zweiten Lotlegierung den folgenden Massenanteil umfasst: zwischen 0,00 % und 7,00 % Wolfram. Die zweite Lotlegierung kann 0,00 %, 0,10 %, 0,20 %, 0,30 %, 0,40 %, 0,50 %, 0,60 %, 0,70 %, 0,80 %, 0,90 %, 1,00 %, 1,10 %, 1,20 %, 1,30 %, 1,40 %, 1,50 %, 1,60 %, 1,70 %, 1,80 %, 1,90 %, 2,00 %, 2,10 %, 2,20 %, 2,30 %, 2,40 %, 2,50 %, 2,60 %, 2,70 %, 2,80 %, 2,90 %, 3,00 %, 3,10 %, 3,20 %, 3,30 %, 3,40 %, 3,50 %, 3,60 %, 3,70 %, 3,80 %, 3,90 %, 4,00 %, 4,10 %, 4,20 %, 4,30 %, 4,40 %, 4,50 %, 4,60 %, 4,70 %, 4,80 %, 4,90 %, 5,00 %, 5,10 %, 5,20 %, 5,30 %, 5,40 %, 5,50 %, 5,60 %, 5,70 %, 5,80 %, 5,90 %, 6,00 %, 6,10 %, 6,20 %, 6,30 %, 6,40 %, 6,50 %, 6,60 %, 6,70 %, 6,80 %, 6,90 %, 7,00 % Wolfram umfassen.

Durch die Beimischung von Wolfram ergibt sich der Vorteil, dass dieses als mischkristallhärtendes Element fungiert und dadurch die mechanischen Eigenschaften des Lötgutes optimiert werden.

Eine Weiterbildung der Erfindung sieht vor, dass die Legierungszusammensetzung der dritten Lotlegierung den folgenden Massenanteil umfasst: zwischen 0,00 % und 3,00 % Aluminium. Die dritte Lotlegierung kann beispielsweise 0,00 %, 0,10 %, 0,20 %, 0,30 %, 0,40 %, 0,50 %, 0,60 %, 0,70 %, 0,80 %, 0,90 %, 1,00 %, 1,10 %, 1,20 %, 1,30 %, 1,40 %, 1,50 %, 1,60 %, 1,70 %, 1,80 %, 1,90 %, 2,00 %, 2,10 %, 2,20 %, 2,30 %, 2,40 %, 2,50 %, 2,60 %, 2,70 %, 2,80 %, 2,90 %, 3,00 % Aluminium umfassen.

Durch die Beimischung von Aluminium ergibt sich der Vorteil, dass die Oxidationseigenschaften verbessert werden. Um einer Reduzierung der Aluminiumkonzentration aus der ersten Lotlegierung durch die zweite und dritte Lotlegierung während der Verdünnung nach Flüssigphasenhomogenisierung entgegenzuwirken, können geringe Anteile von Aluminium in der zweiten und/oder dritten Lotlegierung hinzulegiert sein.

Eine Weiterbildung der Erfindung sieht vor, dass die Legierungszusammensetzung der dritten Lotlegierung den folgenden Massenanteil umfasst: zwischen 0,00 % und 5,70 % Wolfram. Die dritte Lotlegierung kann beispielsweise 0,00 %, 0,10 %, 0,20 %, 0,30 %, 0,40 %, 0,50 %, 0,60 %, 0,70 %, 0,80 %, 0,90 %, 1,00 %, 1,10 %, 1,20 %, 1,30 %, 1,40 %, 1,50 %, 1,60 %, 1,70 %, 1,80 %, 1,90 %, 2,00 %, 2,10 %, 2,20 %, 2,30 %, 2,40 %, 2,50 %, 2,60 %, 2,70 %, 2,80 %, 2,90 %, 3,00 %, 3,10 %, 3,20 %, 3,30 %, 3,40 %, 3,50 %, 3,60 %, 3,70 %, 3,80 %, 3,90 %, 4,00 %, 4,10 %, 4,20 %, 4,30 %, 4,40 %, 4,50 %, 4,60 %, 4,70 %, 4,80 %, 4,90 %, 5,00 %, 5,10 %, 5,20 %, 5,30 %, 5,40 %, 5,50 %, 5,60 %, 5,70 % Wolfram umfassen.

Durch die Beimischung von Wolfram ergibt sich der Vorteil, dass dieses als mischkristallhärtendes Element fungiert und dadurch die mechanischen Eigenschaften des Lötgutes optimiert werden.

Eine Weiterbildung der Erfindung sieht vor, dass das vorbestimmte Mischverhältnis der Pulver der Lotmischung folgende Massenanteile umfasst: 15% erste Lotlegierung; 25% zweite Lotlegierung; 25% dritte Lotlegierung; 35% Additivlegierung.

Eine Weiterbildung der Erfindung sieht vor, dass das vorbestimmte Mischverhältnis der Pulver der Lotmischung folgende Massenanteile umfasst: 25% erste Lotlegierung; 12,5% zweite Lotlegierung; 12,5% dritte Lotlegierung; 50% Additivlegierung.

Eine Weiterbildung der Erfindung sieht vor, dass das vorbestimmte Mischverhältnis der Pulver der Lotmischung folgende Massenanteile umfasst: 50% erste Lotlegierung; 10% zweite Lotlegierung; 10% dritte Lotlegierung; 30% Additivlegierung.

Eine Weiterbildung der Erfindung sieht vor, dass das vorbestimmte Mischverhältnis der Pulver der Lotmischung folgende Massenanteile umfasst: 30% erste Lotlegierung; 10% zweite Lotlegierung; 20% dritte Lotlegierung; 40% Additivlegierung.

Eine Weiterbildung der Erfindung sieht vor, dass das vorbestimmte Mischverhältnis der Pulver der Lotmischung folgende Massenanteile umfasst: 30% erste Lotlegierung; 20% zweite Lotlegierung; 10% dritte Lotlegierung; 40% Additivlegierung.

Eine Weiterbildung der Erfindung sieht vor, dass das vorbestimmte Mischverhältnis der Pulver der Lotmischung folgende Massenanteile umfasst: 50% erste Lotlegierung; 10% zweite Lotlegierung; 10% dritte Lotlegierung; 30% Additivlegierung.

Ein zweiter Aspekt der Erfindung betrifft eine Additivlegierung für eine Lotmischung. Eine Legierungszusammensetzung der Additivlegierung umfasst die folgenden Massenanteile: zwischen 0,00 % und 10,00 % Cobalt; zwischen 10,00 % und 18,00 % Chrom; zwischen 4,00 % und 7,00 % Aluminium; zwischen 4,00 % und 7,00 % Tantal; zwischen 0,00 % und 3,00 % Molybdän; zwischen 5,00 % und 14,00 % Wolfram; zwischen 0,00 % und 0,6 % Yttrium; zwischen 0,00 % und 2,00 % Hafnium; und als Rest Nickel sowie unvermeidbare Verunreinigungen. Die Additivlegierung kann beispielsweise 0,00 %, 0,10 %, 0,20 %, 0,30 %, 0,40 %, 0,50 %, 0,60 %, 0,70 %, 0,80 %, 0,90 %, 1,00 %, 1,10 %, 1,20 %, 1,30 %, 1,40 %, 1,50 %, 1,60 %, 1,70 %, 1,80 %, 1,90 %, 2,00 %, 2,10 %, 2,20 %, 2,30 %, 2,40 %, 2,50 %, 2,60 %, 2,70 %, 2,80 %, 2,90 %, 3,00 %, 3,10 %, 3,20 %, 3,30 %, 3,40 %, 3,50 %, 3,60 %, 3,70 %, 3,80 %, 3,90 %, 4,00 %, 4,10 %, 4,20 %, 4,30 %, 4,40 %, 4,50 %, 4,60 %, 4,70 %, 4,80 %, 4,90 %, 5,00 %, 5,10 %, 5,20 %, 5,30 %, 5,40 %, 5,50 %, 5,60 %, 5,70 %, 5,80 %, 5,90 %, 6,00 %, 6,10 %, 6,20 %, 6,30 %, 6,40 %, 6,50 %, 6,60 %, 6,70 %, 6,80 %, 6,90 %, 7,00 %, 7,10 %, 7,20 %, 7,30 %, 7,40 %, 7,50 %, 7,60 %, 7,70 %, 7,80 %, 7,90 %, 8,00 %, 8,10 %, 8,20 %, 8,30 %, 8,40 %, 8,50 %, 8,60 %, 8,70 %, 8,80 %, 8,90 %, 9,00 %, 9,10 %, 9,20 %, 9,30 %, 9,40 %, 9,50 %, 9,60 %, 9,70 %, 9,80 %, 9,90 %, 10,00 % Cobalt; 10,00 %, 10,10 %, 10,20 %, 10,30 %, 10,40 %, 10,50 %, 10,60 %, 10,70 %, 10,80 %, 10,90 %, 11,00 %, 11,10 %, 11,20 %, 11,30 %, 11,40 %, 11,50 %, 11,60 %, 11,70 %, 11,80 %, 11,90 %, 12,00 %, 12,10 %, 12,20 %, 12,30 %, 12,40 %, 12,50 %, 12,60 %, 12,70 %, 12,80 %, 12,90 %, 13,00 %, 13,10 %, 13,20 %, 13,30 %, 13,40 %, 13,50 %, 13,60 %, 13,70 %, 13,80 %, 13,90 %, 14,00 %, 14,10 %, 14,20 %, 14,30 %, 14,40 %, 14,50 %, 14,60 %, 14,70 %, 14,80 %, 14,90 %, 15,00 %, 15,10 %, 15,20 %, 15,30 %, 15,40 %, 15,50 %, 15,60 %, 15,70 %, 15,80 %, 15,90 %, 16,00 %, 16,10 %, 16,20 %, 16,30 %, 16,40 %, 16,50 %, 16,60 %, 16,70 %, 16,80 %, 16,90 %, 17,00 %, 17,10 %, 17,20 %, 17,30 %, 17,40 %, 17,50 %, 17,60 %, 17,70 %, 17,80 %, 17,90 %, 18,00 % Chrom; 4,00 %, 4,10 %, 4,20 %, 4,30 %, 4,40 %, 4,50 %, 4,60 %, 4,70 %, 4,80 %, 4,90 %, 5,00 %, 5,10 %, 5,20 %, 5,30 %, 5,40 %, 5,50 %, 5,60 %, 5,70 %, 5,80 %, 5,90 %, 6,00 %, 6,10 %, 6,20 %, 6,30 %, 6,40 %, 6,50 %, 6,60 %, 6,70 %, 6,80 %, 6,90 %, 7,00 % Aluminium; 4,00 %, 4,10 %, 4,20 %, 4,30 %, 4,40 %, 4,50 %, 4,60 %, 4,70 %, 4,80 %, 4,90 %, 5,00 %, 5,10 %, 5,20 %, 5,30 %, 5,40 %, 5,50 %, 5,60 %, 5,70 %, 5,80 %, 5,90 %, 6,00 %, 6,10 %, 6,20 %, 6,30 %, 6,40 %, 6,50 %, 6,60 %, 6,70 %, 6,80 %, 6,90 %, 7,00 %Tantal; 0,00 % 0,10 %, 0,20 %, 0,30 %, 0,40 % 0,50 %, 0,60 %, 0,70 %, 0,80 %, 0,90 %, 1,00 %, 1,10 %, 1,20 %, 1,30 %, 1,40 %, 1,50 %, 1,60 %, 1,70 %, 1,80 %, 1,90 %, 2,00 %, 2,10 %, 2,20 %, 2,30 %, 2,40 %, 2,50 %, 2,60 %, 2,70 %, 2,80 %, 2,90 %, 3,00 % Molybdän; 5,00 %, 5,10 %, 5,20 %, 5,30 %, 5,40 %, 5,50 %, 5,60 %, 5,70 %, 5,80 %, 5,90 %, 6,00 %, 6,10 %, 6,20 %, 6,30 %, 6,40 %, 6,50 %, 6,60 %, 6,70 %, 6,80 %, 6,90 %, 7,00 %, 7,10 %, 7,20 %, 7,30 %, 7,40 %, 7,50 %, 7,60 %, 7,70 %, 7,80 %, 7,90 %, 8,00 %, 8,10 %, 8,20 %, 8,30 %, 8,40 %, 8,50 %, 8,60 %, 8,70 %, 8,80 %, 8,90 %, 9,00 %, 9,10 %, 9,20 %, 9,30 %, 9,40 %, 9,50 %, 9,60 %, 9,70 %, 9,80 %, 9,90 %, 10,00 %, 10,10 %, 10,20 %, 10,30 %, 10,40 %, 10,50 %, 10,60 %, 10,70 %, 10,80 %, 10,90 %, 11,00 %, 11,10 %, 11,20 %, 11,30 %, 11,40 %, 11,50 %, 11,60 %, 11,70 %, 11,80 %, 11,90 %, 12,00 %, 12,10 %, 12,20 %, 12,30 %, 12,40 %, 12,50 %, 12,60 %, 12,70 %, 12,80 %, 12,90 %, 13,00 %, 13,10 %, 13,20 %, 13,30 %, 13,40 %, 13,50 %, 13,60 %, 13,70 %, 13,80 %, 13,90 %, 14,00 %Wolfram; 0,00 %, 0,10 %, 0,20 %, 0,30 %, 0,40 %, 0,50 %, 0,60 % Yttrium; 0,00 %, 0,10 %, 0,20 %, 0,30 %, 0,40 %, 0,50 %, 0,60 %, 0,70 %, 0,80 %, 0,90 %, 1,00 %, 1,10 %, 1,20 %, 1,30 %, 1,40 %, 1,50 %, 1,60 %, 1,70 %, 1,80 %, 1,90 % Hafnium; und als Rest Nickel und Verunreinigungen umfassen.

Ein dritter Aspekt der Erfindung betrifft ein Lötverfahren zum Löten eines Bauteils, welches eine Nickelbasis-Superlegierung als Grundwerkstoff aufweist. Es ist vorgesehen, dass das Lötverfahren mittels der beschriebenen Lotmischung durchgeführt wird. Das Lötverfahren umfasst zumindest die folgenden Schritte.

In einem ersten Schritt ist es vorgesehen, dass die Lotmischung auf eine zu lötende Stelle des Grundwerkstoffs des Bauteils aufgetragen wird. Es kann beispielsweise vorgesehen sein, dass die Lotmischung in einen zu lötenden Spalt, oder allgemein einer Öffnung, des Bauteils gefüllt wird.

In einem folgenden Schritt ist es vorgesehen, die Lotmischung bis zu einer Löttemperatur zu erhitzen. Die Löttemperatur liegt dabei zwischen 1150°C und 1250°C, insbesondere bei 1200°C. Die Löttemperatur kann 1150°C, 1160°C, 1170°C, 1180°C, 1190°C, 1200°C, 1210°C, 1220°C, 1230°C, 1240°C oder 1250°C betragen. Die Löttemperatur liegt über einer Liquidus-Temperatur der ersten Lotlegierung. Die Löttemperatur liegt zudem innerhalb eines Schmelzbereichs der zweiten Lotlegierung und innerhalb eines Schmelzbereichs der dritten Lotlegierung. Zudem liegt die Löttemperatur unterhalb einer Solidus-Temperatur der Additivlegierung.

In einem folgenden Schritt ist es vorgesehen, die Löttemperatur über einen vorbestimmten Lötzeitraum zwischen 10 Minuten und 24 Stunden, insbesondere 30 Minuten zu halten, um eine Flüssigphasenhomogenisierung der ersten Lotlegierung, der zweiten Lotlegierung und der dritten Lotlegierung zu ermöglichen. Der Lötzeitraum kann beispielsweise 1,0 Stunden, 1,5 Stunden, 2,0 Stunden, 2,5 Stunden, 3,0 Stunden, 3,5 Stunden, 4,0 Stunden, 4,5 Stunden, 5,0 Stunden, 5,5 Stunden, 6,0 Stunden, 6,5 Stunden, 7,0 Stunden, 7,5 Stunden, 8,0 Stunden, 8,5 Stunden, 9,0 Stunden, 9,5 Stunden, 10,0 Stunden, 10,5 Stunden, 11,0 Stunden, 11,5 Stunden, 12,0 Stunden, 12,5 Stunden, 13,0 Stunden, 13,5 Stunden, 14,0 Stunden, 14,5 Stunden, 15,0 Stunden, 15,5 Stunden, 16,0 Stunden, 16,5 Stunden, 17,0 Stunden, 17,5 Stunden, 18,0 Stunden, 18,5 Stunden, 19,0 Stunden, 19,5 Stunden, 20,0 Stunden, 20,5 Stunden, 21,0 Stunden, 21,5 Stunden, 22,0 Stunden, 22,5 Stunden, 23,0 Stunden, 23,5 Stunden, 24,0 Stunden betragen.

In einem folgenden Schritt ist es vorgesehen, die Temperatur nach der Flüssigphasenhomogenisierung über den vorbestimmten Lötzeitraum auf eine Nachbehandlungstemperatur zu senken, welche zwischen 1150°C und 1180°C liegt. Die Nachbehandlungstemperatur kann 1150°C, 1155°C, 1160°C, 1165°C, 1170°C, 1175°C oder 1180°C betragen.

Die Nachbehandlungstemperatur wird über einen vorbestimmten Nachbehandlungszeitraum zwischen 1 bis 24 Stunden, insbesondere zwischen 3 bis 11 Stunden gehalten, um eine isotherme Erstarrung der Lotmischung zu ermöglichen. Der Nachbehandlungszeitraum kann beispielsweise 1,0 Stunden, 1,5 Stunden, 2,0 Stunden, 2,5 Stunden, 3,0 Stunden, 3,5 Stunden, 4,0 Stunden, 4,5 Stunden, 5,0 Stunden, 5,5 Stunden, 6,0 Stunden, 6,5 Stunden, 7,0 Stunden, 7,5 Stunden, 8,0 Stunden, 8,5 Stunden, 9,0 Stunden, 9,5 Stunden, 10,0 Stunden, 10,5 Stunden, 11,0 Stunden, 11,5 Stunden, 12,0 Stunden, 12,5 Stunden, 13,0 Stunden, 13,5 Stunden, 14,0 Stunden, 14,5 Stunden, 15,0 Stunden, 15,5 Stunden, 16,0 Stunden, 16,5 Stunden, 17,0 Stunden, 17,5 Stunden, 18,0 Stunden, 18,5 Stunden, 19,0 Stunden, 19,5 Stunden, 20,0 Stunden, 20,5 Stunden, 21,0 Stunden, 21,5 Stunden, 22,0 Stunden, 22,5 Stunden, 23,0 Stunden, 23,5 Stunden, 24,0 Stunden betragen. Es kann vorgesehen sein, dass die Lotmischung durch einen Binder und/oder ein Flussmittel vermengt auf die zu lötende Stelle des Bauteils aufgetragen wird. Mit anderen Worten ist es vorgesehen, dass das Flussmittel der Lotmischung beigefügt wird, um die Lotmischung als Paste auf die zu verlötende Stelle aufzutragen.

Weitere Merkmale und deren Vorteile sind den Beschreibungen des ersten Erfindungsaspekts und des zweiten Erfindungsaspekts zu entnehmen.

Ein vierter Aspekt der Erfindung betrifft ein Bauteil für eine Strömungsmaschine. Das Bauteil weist eine Nickelbasis-Superlegierung als Grundwerkstoff auf. Es ist vorgesehen, dass das Bauteil mittels einer Lotmischung gemäß dem ersten Erfindungsaspekt und/oder einer Additivlegierung gemäß dem zweiten Erfindungsaspekt in einem Lötverfahren verlötet wurde.

Weitere Merkmale und deren Vorteile sind den Beschreibungen des ersten Erfindungsaspekts, des zweiten Erfindungsaspekts und des dritten Erfindungsaspekts zu entnehmen.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Es sind darüber hinaus Ausführungen und Merkmalskombinationen, insbesondere durch die oben dargelegten Ausführungen, als offenbart anzusehen, die über die in den Rückbezügen der Ansprüche dargelegten Merkmalskombinationen hinausgehen oder von diesen abweichen. Dabei zeigt:
**FIG. 1** eine schematische Darstellung eines Bauteils für eine Strömungsmaschine; und
**FIG. 2** eine schematische Darstellung eines Verfahrens zum Löten eines Bauteils.

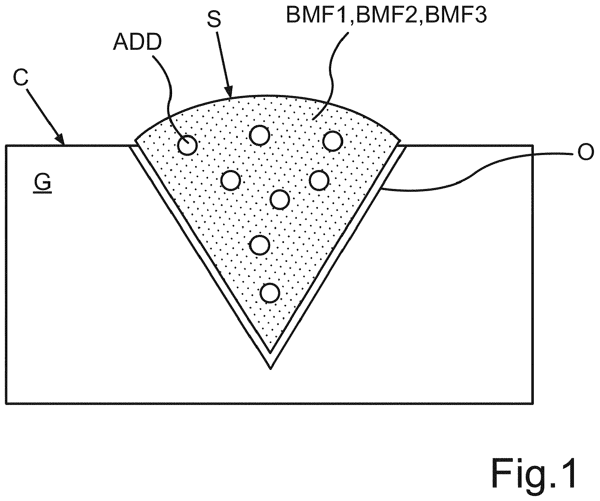

**FIG. 1** zeigt eine schematische Darstellung eines Bauteils C für eine Strömungsmaschine. Das Bauteil C kann eine Nickelbasis-Superlegierung als Grundwerkstoff G aufweisen. Aufgrund von Materialermüdung kann sich in dem Bauteil C ein Riss gebildet haben, welcher mittels eines Lötverfahrens gefüllt sein kann. In dem Lötverfahren kann die Öffnung O mit einer Lotmischung S gefüllt worden sein. Die Lotmischung S kann als Pulver vorliegen und ein Pulver einer ersten Lotlegierung BFM1, ein Pulver einer zweiten Lotlegierung BFM2 und ein Pulver einer dritten Lotlegierung BFM3 aufweisen. Die Lotlegierungen können sich in ihren Zusammensetzungen voneinander unterscheiden und Schmelzpunktsenker aufweisen. Die Lotlegierungen können sich dadurch in ihren Schmelzbereichen voneinander unterscheiden. Der Schmelzbereich der ersten Lotlegierung BFM1 kann innerhalb von 1050°C bis 1160°C liegen. Die Schmelzbereiche der zweiten Lotlegierung BFM2 sowie der dritten Lotlegierung BFM3 können innerhalb von 1180°C bis 1230°C liegen. Die zweite Lotlegierung BFM2 und die dritte Lotlegierung BFM3 können in einer eutektischen oder nah-eutektisch Phase vorliegen, sodass eine Liquidustemperatur T und eine Solidustemperatur T dieser Lotlegierungen in einem Schmelzpunkt zusammenliegen können. Aufgrund der verschiedenen Schmelzbereiche der Lotlegierungen. Dadurch kann es ermöglicht sein, die Lotlegierungen sequentiell zu schmelzen. Der Lotmischung S kann eine Additivlegierung ADD beigefügt sein. Die Additivlegierung ADD kann dazu vorgesehen sein, zumindest einen der Schmelzpunktsenker der Lotlegierungen während eines Fertigungsverfahrens aufzunehmen. Die Additivlegierung ADD kann einen höheren Schmelzbereich aufweisen als die Lotlegierungen. Der Schmelzbereich der Additivlegierung ADD kann innerhalb von 1300°C bis 1500 °C liegen. Zu diesem Zweck kann die Additivlegierung ADD als Diffusionssenke ausgebildet sein. Dadurch kann ein Umfang der in den Grundwerkstoff G diffundierenden Schmelzpunktsenker reduziert sein.

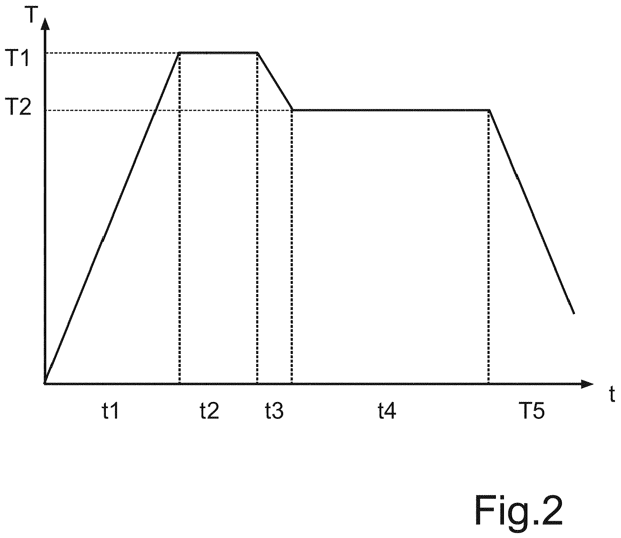

**FIG. 2** zeigt eine schematische Darstellung eines Verfahrens zum Löten eines Bauteils C. Um Sprödphasen zu vermeiden und um die Reproduzierbarkeit der Lotmischung S auch bei erneuten Reparaturen ermöglichen zu können, wurde ein neues Lotkonzept mit vier neu-entwickelten Lotlegierungen entwickelt. Die neue Lotmischung S ist dadurch gekennzeichnet, dass sie lötspaltbreitenunabhängig isotherm erstarren kann; eine isotherme Erstarrung der Lotmischung S ist primär durch die Interaktion zwischen den Lotlegierungen möglich. Die neue Lotmischung S umfasst drei verschiedenen Lotlegierungen BFM1, BFM2, BFM3 und eine Additivlegierung ADD einer hochschmelzende Komponente. Die Lotlegierungen BFM1, BFM2, BFM3 werden auch als Braze Filler Metal, BFM bezeichnet.

In eine zu lötende Stelle des Bauteils C, beispielsweise einen Riss oder eine Öffnung O, kann die Lotmischung S zusammen mit einem Flussmittel und/oder einem Binder aufgetragen sein. Die Lotmischung S kann als Pulver vorliegen und ein Pulver einer ersten Lotlegierung BFM1, ein Pulver einer zweiten Lotlegierung BFM2, ein Pulver einer dritten Lotlegierung BFM3 und ein Pulver einer Additivlegierung ADD aufweisen. Beispielhafte Legierungszusammensetzungen sind in **TAB. 1** gezeigt, wobei die Massenanteile in Prozent, auch als Gew.-% bekannt, angegeben sind.

**TAB. 1**

| Element | BFM1 | BFM2 | BFM3 | Additiv |
|---|---|---|---|---|
| Nickel | Rest | | Rest | Rest |
| Cobalt | 5-15 | Rest | 0-10 | 0-10 |
| Chrom | 8-16 | 15-25 | 18-30 | 10-18 |
| Aluminium | 1 -4,5 | 0-3 | 0-3 | 4-7 |
| Titan | | 8,5-13 | 10-14,5 | |
| Tantal | Max. 4 | | | 4-7 |
| Niob | | 0-5 | 0-1,8 | |
| Molybdän | | | | 0-3 |
| Wolfram | | 0-7 | 0-5,7 | 5-14 |
| Germanium | Max. 10 | | | |
| Bor | 1 -3 | | | |
| Yttrium | 0 bis 0,1 | | | Max. 0,6 |
| Hafnium | Max. 4 | | | Max. 2 |
| (Angaben in Ma.-%) | | | | |

Yttrium muss nicht zwingend in BFM1 enthalten sein. Yttrium verbessert lediglich die Benetzungseigenschaften auf potentiell vorliegenden Oxiden auf Rissflanken. Wolfram fungiert als mischkristallhärtendes Element und optimiert die mechanischen Eigenschaften des Lötgutes. Die Lötstrategie würde auch ohne Wolfram in BFM2 oder BFM3 funktionieren. Im Additiv wird Wolfram jedoch benötigt. Aluminium verbessert die Oxidationseigenschaften. Um einer Reduzierung der Al-Konzentration aus BFM1 durch BFM2/BFM3 (Verdünnung nach Flüssigphasenhomogenisierung) entgegenzuwirken, können geringe Anteile in BFM2/BFM3 hinzulegiert sein. Die Lötstrategie würde auch hier ohne Aluminium in BFM2 oder BFM3 funktionieren.

Die Legierungen BFM1, BFM2, BFM3, ADD können in Form von Pulver in genau definierten Mischungsverhältnissen vermengt und auf die zu reparierende Stelle aufgetragen. Die Lotmischung S kann zusätzlich mit dem Flussmittel und/oder dem Binder vermengt werden, um es als Paste aufzubringen.

Die Lotmischung S kann das Pulver der ersten Lotlegierung BFM1, das Pulver der zweiten Lotlegierung BFM2, das Pulver der dritten Lotlegierung BFM3 und das Pulver der Additivlegierung ADD in einem vorbestimmten Mischverhältnis aufweisen. Mögliche Mischverhältnisse sind beispielsweise in **TAB. 2** offenbart.

Die Additivlegierung ADD kann auch mit konventionellen Lotlegierungen aus dem Stand der Technik gemischt werden. Die Additivlegierung ADD verringert den Anteil eutektischer Sprödphasen durch ein größeres Aufnahmevermögen, womit ein höheres Boridausscheidungspotential gemeint ist, gegenüber anderen Additivlegierungen nach dem Stand der Technik. Dadurch können die mechanischen Eigenschaften im Bereich der Lötstelle verbessert werden.

**TAB. 2**

| BFM1 | BFM2 | BFM3 | ADD |
|---|---|---|---|
| 15 | 25 | 25 | 35 |
| 25 | 12,5 | 12,5 | 50 |
| 50 | 10 | 10 | 30 |
| 30 | 10 | 20 | 40 |
| 30 | 20 | 10 | 40 |
| 50 | 10 | 10 | 30 |
| (Angaben in Ma.-%) | | | |

Das neue Lötkonzept sieht vor, den primären und schnell-diffundierenden Schmelzpunktsenker Bor durch alternative Schmelzpunktsenker zu reduzieren. Gleichzeitig sollen die alternativen Schmelzpunktsenker keine negativen mikrostrukturellen Eigenschaften aufzeigen. Bor und Titan können in einer Legierung miteinander neue Phasen bilden, beispielsweise τ-Phase oder TiB2, wodurch sich der Schmelzpunkt hebt. Ein hoher Schmelzpunkt führt zu schlechten Fließeigenschaften des Lotes. Deswegen wurden die Schmelzpunktsenker in funktionale Cluster eingeteilt und in verschiedene Legierungen hinzugemischt:
Die erste Lotlegierung BFM1 enthält Bor und hat im Vergleich mit der zweiten Lotlegierung BFM2 und der dritten Lotlegierung BFM3 einen niedrigeren Schmelzpunkt. Dadurch hat die erste Lotlegierung BFM1 gute Fließeigenschaften.

Die zweite Lotlegierung BFM2 und die dritte Lotlegierung BFM3 enthalten kein Bor. Der primäre Schmelzpunktsenker ist hierbei Niob und Titan. Da Niob und Titan üblicherweise nur leicht schmelzpunktsenkend wirken, wurde die Werkstoffmatrix dahingehen angepasst, dass Titan und Niob starke schmelzpunktsenkende Eigenschaften aufweisen.

Die Additivlegierung ADD hat einen höheren Schmelzpunkt als BFM1, BFM2, BFM3 und Additiv. Der Schmelzpunkt ist höher als die Prozesstemperatur/Löttemperatur T1, wodurch das Additiv nicht aufschmilzt. Zudem wurde die Legierungschemie der Additivlegierung ADD dahingehend optimiert, dass sie eine hohe Löslichkeit für den am schnellsten diffundierenden Schmelzpunktsenker, Bor, ausweist.

Die zweite Lotlegierung BFM2 und die dritte Lotlegierung BFM3 sind Lotlegierungen bei denen die Matrix in Abhängigkeit des verwendeten Schmelzpunktsenkers im Hinblick einer Temperatursenkung optimiert wurde. Dabei wurden lediglich Elemente verwendet, die sich auch in Nickelbasissuperlegierungen befinden. Die Matrixzusammensetzungen unterscheiden sich zwischen der zweiten Lotlegierung BFM2 und der dritten Lotlegierung BFM3 erheblich.

Nach dem Auftragen der Lotmischung S kann die Lotmischung S ausgehend von einer Zimmertemperatur über einen Aufwärmzeitraum t1bis zu einer Löttemperatur T1 von 1150 °C bis 1250 °C, insbesondere circa 1200 °C über einen vorbestimmten Erwärmungszeitraum erhitzt werden. Es kann vorgesehen sein, dass sich die Lotlegierungen in ihren Schmelzbereichen voneinander unterscheiden. Der Schmelzbereich der ersten Lotlegierung BFM1 kann beispielsweise innerhalb von 1050°C bis 1160°C und somit unterhalb der Schmelzbereiche der zweiten Lotlegierung BFM2 und der dritten Lotlegierung BFM3 zwischen 1180°C und 1230°C liegen. Aufgrund der unterschiedlichen Schmelzbereiche der Lotlegierungen kann es zu einem sequentiellen Schmelzen der Lotlegierungen kommen. Es kann beispielsweise zuerst eine Solidus-Temperatur T der ersten Lotlegierung BFM1 überschritten werden, sodass die erste Lotlegierung BFM1 zuerst zu schmelzen beginnt. Während eines weiteren Erwärmens kann eine Liquidus-Temperatur T der ersten Lotlegierung BFM1 überschritten werden, sodass die erste Lotlegierung BFM1 vollständig geschmolzen sein kann. Die Löttemperatur T1 kann beispielsweise innerhalb des Schmelzbereichs der zweiten Lotlegierung BFM2 sowie innerhalb des Schmelzbereichs der dritten Lotlegierung BFM3 liegen. Bei einem weiteren Erwärmen kann die Temperatur T die Solidus-Temperatur T der zweiten Lotlegierung BFM2 sowie der dritten Lotlegierung BFM3 überschreiten, sodass auch die zweite Lotlegierung BFM2 und die dritte Lotlegierung BFM3 zu schmelzen beginnen. Liegt die Löttemperatur T1 über der Liquidus-Temperatur T der zweiten Lotlegierung BFM2 sowie der dritten Lotlegierung BFM3 werden auch diese vollständig geschmolzen. Löttemperatur T1 kann so gewählt sein, dass diese unterhalb einer Solidus-Temperatur T der Additivlegierung ADD liegt. Die Additivlegierung ADD wird somit bei der Löttemperatur T1 nicht geschmolzen. Ein Schmelzbereich der Additivlegierung ADD kann innerhalb von 1300°C bis 1500 °C liegen.

Die Löttemperatur T1 kann für einen vorbestimmten Lötzeitraum t2 von 10 Minuten bis max. 24 Stunden, üblicherweise für 30 Minuten gehalten werden. Dadurch ist es möglich, dass es zu einer Flüssigphasenhomogenisierung der ersten Lotlegierung BFM1, der zweiten Lotlegierung BFM2 und der dritten Lotlegierung BFM3 kommt. Während des Lötzeitraums t2 kann es zusätzlich zu der Flüssigphasenhomogenisierung der Lotlegierungen zu einer gesteuerten Diffusion von Bor aus der Schmelze der Lotlegierungen in die Additivlegierung ADD kommen.

Durch das sequenzielle Aufschmelzen des Lotes soll die Interaktion zwischen der ersten Lotlegierung BFM1, der zweiten Lotlegierung BFM2 sowie der dritten Lotlegierung BFM3 gesteuert werden. Da die zweite Lotlegierung BFM2 und die dritte Lotlegierung BFM3 höhere Schmelzpunkte haben, kann die Löttemperatur T1 oberhalb der Liquidustemperatur der ersten Lotlegierung BFM1 gehoben werden, was gute Fließeigenschaft bewirkt. Nachdem der Schmelzbereich der zweiten Lotlegierung BFM2 sowie der dritten Lotlegierung BFM3 erreicht ist, vermischen sich die Lotlegierungen durch Flüssigphasenhomogenisierung. Dadurch werden die Schmelzpunktsenker einander verdünnt. Die Konzentration von Bor in der neuen Schmelze ist im Vergleich zur Konzentration in der ersten Lotlegierung BFM1 stark reduziert.

Durch die gleichzeitige Löslichkeitssteigerung im Additiv kann der Schmelze das Bor über Diffusionsvorgänge entzogen werden. Die Mischungen zwischen der ersten Lotlegierung BFM1, der zweiten Lotlegierung BFM2 und der dritten Lotlegierung BFM3 sind in einem definierten Mischungsverhältnis angegeben, sodass die finale Legierungschemie eine γ'-ausscheidungsgehärtete Lötgutzone aufweist. Hierbei bildet das Aluminium und Germanium aus der ersten Lotlegierung BFM1 mit dem Titan und Niob aus der zweiten (BFM2) und dritten Lotlegierung (BFM3), die γ'-Phase. Die hohe Cobalt-Konzentration aus der zweiten Lotlegierung BFM2 reduziert die γ'-Solvustemperatur, um die γ'-Phase trotz hoher Konzentration γ'-bildender Elemente sekundär auszuscheiden und festigkeitssteigernd wirken zu können.

Nach dem Lötzeitraum t2 kann die Temperatur T der Lotmischung S von der Löttemperatur T1 auf eine Nachbehandlungstemperatur T2 über einen vorbestimmten Zwischenzeitraum t3 gesenkt werden. Die Nachbehandlungstemperatur T2 kann beispielsweise zwischen 1150°C bis 1180°C liegen. Die Nachbehandlungstemperatur T2 kann beispielsweise unterhalb einer γ'-Solvus-Temperatur T des Grundwerkstoffs G des Bauteils C liegen, wodurch eine mikrostrukturelle Schädigung des Grundwerkstoffs G vermieden werden kann.

Die Nachbehandlungstemperatur T2 kann über einen vorbestimmten Nachbehandlungszeitraum t4, beispielsweise über 1 Stunde bis 24 Stunden, insbesondere 3 bis 11 Stunden gehalten werden, um eine isotherme Erstarrung der Lotmischung S zu ermöglichen. Ziel ist, dass sich die finale Lötmikrostruktur bei der isothermen Erstarrung aus einer Schmelze entsteht, die innerhalb des Lötprozesses legiert wird und sich somit konkurrierende Zieleigenschaften durch die Nutzung verschiedener Lotlegierungen kombinieren lassen.

Das Additiv wurde im Hinblick einer deutlich höheren Löslichkeit für den am schnellsten diffundierenden Schmelzpunktsenker, Bor, neu entwickelt. Wenn die Bor-Konzentration zunächst durch die Homogenisierung mit der zweiten Lotlegierung BFM2 und der dritten Lotlegierung BFM3 reduziert wird, soll die Lotmischung S durch die Diffusion der Schmelzpunktsenker in Partikel der Additivlegierung ADD gesteuert werden. Da die Bor-Konzentration in der Lotmischung S und die Bor-Löslichkeit der Additivlegierung ADD erhöht wurde, kann die Lotmischung S ohne Interaktion mit dem Grundwerkstoff G isotherm erstarren. Dies bedeutet, insbesondere ohne Diffusion von Bor in den Grundwerkstoff G. Das Additiv kann auch in Kombination mit bereits existierenden borhaltigen Lotlegierungen verwendet werden. Die optimierende Eigenschaft, Sprödphasen zu vermeiden, wird auch dort reduziert, nicht jedoch vollständig vermieden, da die Bor-Konzentration in bekannten Lotlegierungen zu hoch ist. Unter dem Begriff Löslichkeit ist vorliegend der konzentrationsabhängige Phasenübergang von Bor an der Soliduslinie bei Prozessrelevanten Temperaturen gemeint. Das Aufnahmevermögen für B im Additiv wurde gesteigert. Hierzu ist eine neue Phasenbildung notwendig, da die Löslichkeit von Bor in Nickel vernachlässigbar gering ist.

Nach dem Nachbehandlungszeitraum t4 kann das Erwärmen der Lotmischung S beendet werden, sodass die Temperatur T über einen Abkühlzeitraum von der Nachbehandlungstemperatur T2 auf eine Zimmertemperatur T abfallen kann.

### Bezugszeichenliste:

- BFM1: Erste Lotlegierung
- BFM2: Zweite Lotlegierung
- BFM3: Dritte Lotlegierung
- ADD: Additivlegierung
- S: Lotmischung
- C: Bauteil
- G: Grundwerkstoff
- O: Öffnung
- t: Zeit
- t1: Aufwärmzeitraum
- t2: Lötzeitraum
- t3: Zwischenzeitraum
- t4: Nachbehandlungszeitraum
- t5: Abkühlzeitraum
- T: Temperatur
- T1: Löttemperatur
- T2: Nachbehandlungstemperatur

## Patentansprüche

1. Lotmischung (S) zur Anwendung in einem Verfahren zum Löten eines Bauteils (C), welches eine Nickelbasis-Superlegierung als Grundwerkstoff (G) aufweist, wobei die Lotmischung (S) die folgenden Pulver in einem vorbestimmten Mischverhältnis umfasst: ein Pulver einer ersten Lotlegierung (BFM1), ein Pulver einer zweiten Lotlegierung (BFM2), ein Pulver einer dritten Lotlegierung (BFM3) und ein Pulver einer Additivlegierung (ADD), **dadurch gekennzeichnet, dass**
eine Legierungszusammensetzung der ersten Lotlegierung (BFM1) folgende Massenanteile umfasst:
zwischen 5,00 % und 15,00 % Cobalt;
zwischen 8,00 % und 16,00 % Chrom;
zwischen 1,00 % und 4,5 % Aluminium;
zwischen 0,00 % und 4,00 % Tantal;
zwischen 0,00 % und 10,0 % Germanium;
zwischen 1,00 % und 3,00 % Bor;
zwischen 0,00 % und 4,00 % Hafnium;
und
als Rest Nickel sowie unvermeidbare Verunreinigungen;
eine Legierungszusammensetzung der zweiten Lotlegierung (BFM2) folgende Massenanteile umfasst:
zwischen 15,00 % und 25,00 % Chrom;
zwischen 8,50 % und 13,00 % Titan;
zwischen 0,00 % und 5,00 % Niob; und
als Rest Cobalt sowie unvermeidbare Verunreinigungen;
eine Legierungszusammensetzung der dritten Lotlegierung (BFM3) folgende Massenanteile umfasst:
zwischen 0,00 % und 10,00 % Cobalt;
zwischen 18,00 % und 30,00 % Chrom;
zwischen 10,00 % und 14,50 % Titan;
zwischen 0,00 % und 1,80 % Niob; und
als Rest Nickel sowie unvermeidbare Verunreinigungen;
eine Legierungszusammensetzung der Additivlegierung (ADD) folgende Massenanteile umfasst:
zwischen 0,00 % und 10,00 % Cobalt;
zwischen 10,00 % und 18,00 % Chrom;
zwischen 4,00 % und 7,00 % Aluminium;
zwischen 4,00 % und 7,00 % Tantal;
zwischen 0,00 % und 3,00 % Molybdän;
zwischen 5,00 % und 14,00 % Wolfram;
zwischen 0,00 % und 0,60 % Yttrium;
zwischen 0,00 % und 2,00 % Hafnium; und
als Rest Nickel sowie unvermeidbare Verunreinigungen.

2. Lotmischung (S) nach Anspruch 1,
**dadurch gekennzeichnet, dass**
die Legierungszusammensetzung der ersten Lotlegierung (BFM1) folgende Massenanteile umfasst:
zwischen 0,00 % und 0,05 % Yttrium.

3. Lotmischung (S) nach Anspruch 1 oder 2,
**dadurch gekennzeichnet, dass**
die Legierungszusammensetzung der zweiten Lotlegierung (BFM2) folgenden Massenanteil umfasst:
zwischen 0,00 % und 3,00 % Aluminium.

4. Lotmischung (S) nach einem der vorhergehenden Ansprüche,
**dadurch gekennzeichnet, dass**
die Legierungszusammensetzung der zweiten Lotlegierung (BFM2) folgenden Massenanteil umfasst:
zwischen 0,00 % und 7,00 % Wolfram.

5. Lotmischung (S) nach einem der vorhergehenden Ansprüche,
**dadurch gekennzeichnet, dass**
die Legierungszusammensetzung der dritten Lotlegierung (BFM3) folgenden Massenanteil umfasst:
zwischen 0,00 % und 3,00 % Aluminium.

6. Lotmischung (S) nach einem der vorhergehenden Ansprüche,
**dadurch gekennzeichnet, dass**
die Legierungszusammensetzung der dritten Lotlegierung (BFM3) folgenden Massenanteil umfasst:
zwischen 0,00 % und 5,70 % Wolfram.

7. Lotmischung (S) nach einem der Ansprüche 1 bis 6,
**dadurch gekennzeichnet, dass**
das vorbestimmte Mischverhältnis der Pulver der Lotmischung (S) folgende Massenanteile umfasst:
15% BFM1 erste Lotlegierung (BFM1);
25% BFM2 zweite Lotlegierung (BFM2);
25% BFM3 dritte Lotlegierung (BFM3); und
35% Additivlegierung (ADD).

8. Lotmischung (S) nach einem der Ansprüche 1 bis 6,
**dadurch gekennzeichnet, dass**
das vorbestimmte Mischverhältnis der Pulver der Lotmischung (S) folgende Massenanteile umfasst:
25% BFM1 erste Lotlegierung (BFM1);
12,5% BFM2 zweite Lotlegierung (BFM2);
12,5% BFM3 dritte Lotlegierung (BFM3); und
50% Additivlegierung (ADD).

9. Lotmischung (S) nach einem der Ansprüche 1 bis 6,
**dadurch gekennzeichnet, dass**
das vorbestimmte Mischverhältnis der Pulver der Lotmischung (S) folgende Massenanteile umfasst:
50% BFM1 erste Lotlegierung (BFM1);
10% BFM2 zweite Lotlegierung (BFM2);
10% BFM3 dritte Lotlegierung (BFM3); und
30% Additivlegierung (ADD).

10. Lotmischung (S) nach einem der Ansprüche 1 bis 6,
**dadurch gekennzeichnet, dass**
das vorbestimmte Mischverhältnis der Pulver der Lotmischung (S) folgende Massenanteile umfasst:
30% BFM1 erste Lotlegierung (BFM1);
10% BFM2 zweite Lotlegierung (BFM2);
20% BFM3 dritte Lotlegierung (BFM3); und
40% Additivlegierung (ADD).

11. Lotmischung (S) nach einem der Ansprüche 1 bis 6,
**dadurch gekennzeichnet, dass**
das vorbestimmte Mischverhältnis der Pulver der Lotmischung (S) folgende Massenanteile umfasst:
30% BFM1 erste Lotlegierung (BFM1);
20% BFM2 zweite Lotlegierung (BFM2);
10% BFM3 dritte Lotlegierung (BFM3); und
40% Additivlegierung (ADD).

12. Lotmischung (S) nach einem der Ansprüche 1 bis 6,
**dadurch gekennzeichnet, dass**
das vorbestimmte Mischverhältnis der Pulver der Lotmischung (S) folgende Massenanteile umfasst:
50% BFM1 erste Lotlegierung (BFM1);
10% BFM2 zweite Lotlegierung (BFM2);
10% BFM3 dritte Lotlegierung (BFM3); und
30% Additivlegierung (ADD).

13. Additivlegierung (ADD) für eine Lotmischung (S),
**dadurch gekennzeichnet, dass**
eine Legierungszusammensetzung der Additivlegierung (ADD) folgende Massenanteile umfasst:
zwischen 0,00 % und 10,00 % Cobalt;
zwischen 10,00 % und 18,00 % Chrom;
zwischen 4,00 % und 7,00 % Aluminium;
zwischen 4,00 % und 7,00 % Tantal;
zwischen 0,00 % und 3,00 % Molybdän;
zwischen 5,00 % und 14,00 % Wolfram;
zwischen 0,00 % und 0,60 % Yttrium;
zwischen 0,00 % und 2,00 % Hafnium; und
als Rest Nickel sowie unvermeidbare Verunreinigungen.

14. Verfahren zum Löten eines Bauteils (C), welches eine Nickelbasis-Superlegierung als Grundwerkstoff (G) aufweist, mittels einer Lotmischung (S) nach einem der Ansprüche 1 bis 12, umfassend zumindest die folgenden Schritte:
- Auftragen der Lotmischung (S) auf eine zu lötende Stelle des Grundwerkstoffs (G) des Bauteils (C),
- Erhitzen der Lotmischung (S) bis zu einer Löttemperatur (T1), wobei die Löttemperatur zwischen 1150°C und 1250°C, insbesondere bei 1200°C liegt,
- Halten der Löttemperatur (T1) über einen vorbestimmten Lötzeitraum (t2) zwischen 10 Minuten und 24 Stunden, insbesondere 30 Minuten,
- Senken der Temperatur auf eine Nachbehandlungstemperatur (T2), welche zwischen 1150°C und 1180°C liegt, und
- Halten der Nachbehandlungstemperatur (T2) über einen vorbestimmten Nachbehandlungszeitraum (t4) über 1 Stunde bis 24 Stunden, insbesondere 3 Stunden bis 11 Stunden.

15. Bauteil (C) für eine Strömungsmaschine,
wobei das Bauteil (C) eine Nickelbasis-Superlegierung als Grundwerkstoff (G) aufweist,
**dadurch gekennzeichnet, dass**
das Bauteil (C) mittels einer Lotmischung (S) nach einem der Ansprüche 1 bis 12 und/oder nach einem Verfahren nach Anspruch 14 oder mittels einer Additivlegierung nach Anspruch 13 verlötet ist.
